# EUROPÄISCHE PATENTSCHRIFT

(11) **EP 2 528 724 B1**
(45) Veröffentlichungstag und Bekanntmachung des Hinweises auf die Patenterteilung: **17.06.2015**
(21) Anmeldenummer: 11701752.5
(22) Anmeldetag: 21.01.2011
(51) Int. Cl.: B29C 47/42, B29C 47/00, B29C 47/82, C08J 11/10

(54) **DEVULKANISIEREN VON ALTGUMMI**
DEVULCANISATION OF WASTE RUBBERS
PROCEDE DE DEVULCANISATION DE CAOUTCHOUC RECYCLE

(30) Priorität: 31.01.2010 DE 102010006476
(43) Veröffentlichungstag der Anmeldung: 05.12.2012
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2011/000239
(87) Internationale Veröffentlichungsnummer: WO 2011/091966

(56) Entgegenhaltungen:
- DE-A1-102007 026 173
- DE-C1- 3 815 061

## Beschreibung

Die Erfindung betrifft das Devulkanisieren von Altgummi.

Gummi besteht aus Naturkautschuk und/oder künstlich hergestellten Elastomeren, deren Moleküle eine Vernetzung erfahren haben. Bekannt sind dabei unter anderem Schwefel-Kohlenstoffverbindungen und Schwefel-Schwefel-Verbindungen zwischen den Molekülen. Dabei wird auch von Querverbindungen gesprochen.

Durch das Vernetzen ändern sich die Materialeigeschaften drastisch. Das betrifft insbesondere die Festigkeit, Elastizität und die Wärmebelastungsfähigkeit.

Überwiegend kommt Gummi in der Fahrzeugindustrie zur Anwendung. Die Belastbarkeit von Fahrzeugreifen ist legendär.

Je nach Laufkilometer der Reifen ergibt sich ein Verschleißzustand, der sich daran mißt, wie stark das Profil der Reifen abgefahren ist.

Wenn das Profil eine bestimmte Dicke unterschritten hat, muß ein Reifenwechsel vorgenommen werden.

Es fallen Altreifen bzw. Altgummi an.

Es gibt zwar verschiedene Vorschläge zur chemischen Aufbereitung von Altgummi, der Aufwand ist jedoch so hoch, daß bisher davon kaum Gebrauch gemacht wird. Vielmehr wird Altgummi vorzugsweise der Verbrennung zugeführt. Dabei hat sich die Zementindustrie als großer Abnehmer erwiesen. Dort wird der Altgummi in den Drehrohröfen mitverbrannt. Die Zementdrehrohrofen besitzt eine lange Verbrennungsstrecke, so daß unverbrannte Gase nachverbrannt werden. Eine Belastung der Umwelt aus unverbrannten Gasen der Altreifenverbrennung wird damit ausgeschlossen.

Die Zementindustrie verlangt für die Altreifenverbrennung jedoch zumeist einen Entsorgungsbeitrag.

Die Entsorgung der Altreifen wird außerdem nicht mehr als zeitgemäß angesehen.

Deshalb bemüht man sich seit langem um das Recycling von Gummi und Elastomeren.

Dabei werden verschiedene Wege gegangen.

Nach der DE60004885T2 werden zum Devulkanisieren von gehärteten(vernetzten) Elastomeren und Gummi Modifizierungsmittel eingesetzt. Diese Modifizierungsmittel bestehen ganz oder teilweise aus Adipinsäure oder Oxalsäure. Ferner finden Additive Anwendung, die aus Schwefel, Zinkoxid und Stearinsäure bestehen.

In der DE 909041 sind als Modifizierungsmittel Edeleanuextrakte vorgesehen, die aus Erdölverarbeitung gewonnen werden. Dabei handelt es sich zum Beispiel um Kerosin, Nitrobenzol, Furfurol, Phenol, Dichlordiäthylenäther, Die DE 60008279T2 sieht Aminverbindungen als Devulkanisierungsmittel/Modifizierungsmittel vor.

Die DE60215210T2 sieht aromatisches Öl, naphthenisches Öl oder paraffinisches Öl als Devulkanisierungsmittel vor.

Die Der60306089T2 sieht 2-Butanol und Kohlendioxid als Devulkanisierungsmittel vor.

Auch die DE60120804T2 sieht Modifizierungsmittel vor. Allerdings wird das Öl aus dem Recyclat selbst gewonnen.

Aus Sicht der Erfindung haben die Modifizierungsmittel den Nachteil, daß die Modifizierungsmittel ganz oder teilweise in dem Recyclat verbleiben und die Verwendbarkeit des Recyclats ganz stark beschränken.

Es ist auch ein Devulkanisieren ohne chemische Mittel bekannt.

Bevorzugt finden dabei Mikrowellen und Ultraschallwellen Anwendung.

Mit den Wellen wird eine starke mechanische Belastung des Gummis und der Elastomere erzeugt, mit denen die Molekülketten aufgebrochen werden sollen. Die mechanische Belastung kann durch Anwendung von Wärme bzw. durch hohen Dampfdruck ergänzt werden.

Gleichwohl wird diese Art der Devulkanisation als unzureichend angesehen, vgl. zum Beispiel die DE60120804T2.

Auch die Erfindung hat sich die Aufgabe gestellt, das Altgummi in wirtschaftlicher Weise zu recyclen.

Dabei geht die Erfindung einen anderen Weg.

Die Erfindung will bei Altgummi und Elastomere mit Vernetzung, die mechanisch und /oder thermisch zumindest teilweise zerstörbar ist, mittels Extruder devulkanisieren. Insbesondere will die Erfindung Altgummi und Elastomere, deren Vernetzung auf einer Schwefelverbindung basiert, devulkanisieren.

Nach der Erfindung wird das mit den Merkmalen des Hauptanspruches erreicht. Dabei findet ein Planetwalzenextruder Anwendung.

An sich ist bekannt, daß Einschneckenextrudern und

Doppelschneckenextrudern eine mechanische Belastung verursachen, durch die Molekülgerüste zerbrechen können. Ein entsprechender Stand der Technik ist in der DE60120804T2 wie auch in der DE69329245T2, wie auch in der DE69724239T2 beschrieben.

Bei Planetwalzenextrudern wird gegenüber einem Doppelschneckenextruder eine sehr viel geringere mechanische Belastung der Molekülgerüste gesehen. Aus der DE 102007026173 ist zwar ein Hinweis auf die Verwendung von Planetwalzenextrudern für die Devulkanisierung bekannt.

Bislang haben Planetwalzenextruder jedoch in Produktionsanlagen für das Recycling von Gummi und Elastomeren keinen Eingang gefunden. Der geringen Erwartung an die mechanische Belastung von Molekülketten durch Planetwalzenextruder entspricht, daß einige Hinweise auf die Verwendung von Planetwalzenextrudern für die Regenerierung von Gummi zugleich mit dem Hinweis auf die Zugabe von oben beschriebenen Devulkanisationsmitteln verbunden sind.

Die Erfindung baut gleichwohl mit Dispergierringen eine zum Devulkanisieren ausreichende mechanische Wirkung in Planetwalzenextrudern auf. Mit den Dispergierringen wird der Durchtrittsquerschnitt für das im Extruder behandelte Gummi bzw. Elastomer gemäß den geltenden Ansprüchen mehr als durch einen Anlaufring reduziert. Anlaufringe sind notwendiger Bestand von Planetwalzenextrudern. Üblicherweise besitzen Anlaufringe einen Innendurchmesser, der in etwa gleich dem Durchmesser ist, welche die Mittelachsen der Planetspindeln beschreiben. Diverse Bauarten zeigen auch einen größeren Innendurchmesser. Mit diesen Anlaufringen ist noch keine ausreichende Devulkanisierung zu erreichen.

Der Innendurchmesser des erfindungsgemäß vorgesehenen Dispergieringes besitzt vorzugsweise einen Innendurchmesser, der mindestens 10% kleiner, vorzugsweise mindestens 20% und noch weiter bevorzugt mindestens 30% kleiner als der Teilkreisdurchmesser der Planetspindeln ist.

Die Reduzierung des Durchtrittsquerschnittes kann sogar so weit gehen, daß der Dispergierring in eine Nut der Zentralspindel eingreift.

Dabei kann der Dispergierring zum Beispiel sogar nur noch einen Spalt von wenigen Millimetern, im Extremfall von zum Beispiel einem Millimeter, bis zum Zahngrund für den Durchtritt von Gummi und Elastomeren offen lassen.

Nach der Erfindung kann es dabei von Vorteil sein, die Nut um ein geringes Maß, zum Beispiel um das Maß von einem Millimeter, über den Zahngrund der Verzahnung an der Zentralspindel hinaus in die Zentralspindel einzuarbeiten.

Vorzugsweise wird das erfindungsgemäße Verfahren zur Aufbereitung von Altgummi eingesetzt, das von metallischen Verstärkungseinlagen befreit ist. Metallische Verstärkungseinlagen kommen insbesondere an Altreifen vor. Es handelt sich um Stahleinlagen, welche die Fahrzeugreifen in der gewünschten Form halten.

Für die Trennung von Gummi und Metall eignen sich verschiedene Verfahren. Wahlweise wird das Altgummi stark gekühlt und dem stark gekühlten Zustand in einer Mühle zerkleinert. In gekühltem Zustand wird die Zerkleinerung leichter, weil die Nachgiebigkeit von Gummi abnimmt. Je kälter das Gummi ist, desto leichter wird die Zerkleinerung.

Nach der Erfindung werden Gummi und Elastomere als Schnitzel in den Extruder eingesetzt. Der mittlere Schnitzeldurchmesser beträgt vorzugsweise 5 bis 40mm, nach weiter bevorzugt 15 bis 30mm.

Im Planetwalzenextruder läßt sich die Temperatur des Behandlungsgutes sehr gut einstellen, weil das Behandlungsgut bzw. Gummi und Elastomere großflächig und dünnschichtig ausgewalzt wird. Dadurch wirkt der Planetwalzenextruder als großflächiger Wärmetauscher. Einschneckenextruder und Doppelschneckenextruder mit vergleichbarer Baugröße besitzen eine vergleichsweise kleine Wärmetauscherfläche.

Die Planetwalzenextruder besitzen eine mittig angeordnete, angetriebene Zentralspindel. Die Zentralspindel ist außen üblicherweise mit eine Evolventenverzahnung versehen. Die Verzahnung wird nach Zahnmodulen unterschieden.

Die Zentralspindel wird von einem Gehäuse umgeben, das eine Innenverzahnung besitzt. Die Innenverzahnung hat den gleichen Zahnmodul wie die Außenverzahnung an der Zentralspindel.

Zwischen dem Gehäuse und der Zentralspindel sind mehrere Planetenspindel gleichmäßig am Umfang der Zentralspindel angeordnet. Die Planetspindeln besitzen eine Außenverzahnung mit gleichem Modul wie die Zentralspindel und die Gehäuseverzahnung. Die Planetspindeln kämmen mit der Zentralspindel und der Innenverzahnung des Gehäuses.

Die umlaufenden Planetspindeln gleiten in Förderrichtung vorn an einem Gleitring bzw. Anlaufring, so daß deren Umlaufbahn in axialer Richtung bestimmt ist. Wegen der weiteren Einzelheiten üblicher Planetwalzenextruder wird zum Beispiel auf folgende Druckschriften Bezug genommen: DE 102009019846, DE 102009013839, DE102008063036, DE 102008018686, DE 102007058174, DE102007050466, DE 102007041486, DE 102007040645.

Das Einsatzgut wird im Planetwalzenextruder zwischen den miteinander kämmenden Zähnen dünnschichtig ausgewalzt. Dadurch entsteht eine starke Knetwirkung auf das Altgummi. Durch die Knetwirkung wird Wärme in das Altgummi getragen.

Die Knetwirkung kann durch unterschiedliche Zahl und/oder unterschiedliche Ausbildung der Planetspindeln beeinflußt werden.

Die Zahl der Planetspindeln beträgt vorzugsweise mindestens 5, vorzugsweise mindestens 6. Je größer der Durchmesser der Zentralspindel ist, desto mehr Planetspindeln sind üblicherweise in einem Modul/Abschnitt vorgesehen. So können zum Beispiel bei größeren Baugrößen ohne weiteres 24 und mehr Spindeln zum Einsatz kommen.

Die Planetspindeln können zum Beispiel als Normalspindeln , als Igelspindeln oder Noppenspindeln ausgebildet sein, wie sie in der DE 10 2004 048 440 oder in der US 7476416 beschrieben sind. Die Normalspindeln besitzt eine von einem Ende zum anderen Ende durchgehend gleiche Verzahnung.

Die Igelspindel baut auf der Normalspindel auf. In Abständen sind bei den Igelspindeln ringförmig umlaufende Ausnehmungen in die Verzahnung eingearbeitet, so daß in einer seitlichen Betrachtung einer Spindel eine meandernde Kontur ersichtlich ist.

Die Noppenspindel baut auch auf einer Normalspindel auf. Dabei ist die Spindel allerdings nach der Normalverzahnung mit einer gegenläufigen Verzahnung versehen, welche die Normalverzahnung kreuzt. Das heißt, in die Zähne der Normalverzahnung werden mit der gegenläufigen Verzahnung Lücken von bestimmter Form und Folge geschnitten. Die von der Normalverzahnung bleibenden Zähne zeigen eine Noppenform. Durch die Lücken reduziert sich die Förderwirkung der Planetspindeln, während die Knetwirkung zunimmt. Außerdem unterscheidet sich der Knetvorgang mit den Noppen von dem Knetvorgang mit der Normalspindel und der Igelspindel.

Die zu den Igelspindeln und Noppenspindeln genannten Druckschriften beschreiben weitere nützliche Einzelheiten von Planetwalzenextrudern, die für eine erfindungsgemäß Devulkanisierung geeignet sind.

Die Temperatur des Behandlungsgutes wird im Planetwalzenextruder zur Zuführung von Wärme bzw. durch Kühlung auf ein für die Devulkanisierung gewünschtes Niveau.

Dieses Niveau liegt nach der Erfindung zwischen 250 und 350 Grad Celsius, vorzugsweise zwischen 250 und 300 Grad Celsius.

Die Knetwirkung und Wärmewirkung wird für die Dauer von 1 bis 4 min, vorzugsweise 1,5 bis 3 min aufrecht erhalten. Diese Dauer entspricht der Aufenthaltsdauer in dem Planetwalzenextruder.

Bei erfindungsgemäßer Knetung und Erwärmung des Altgummis wird die Schwefel-Verbindung gesprengt. Die Schwefelverbindung geht in einen gasförmigen Zustand über. Das Gas wird abgesaugt. Am Extruder wird das als Entgasung bezeichnet.

Die genaue Bestimmung der materialabhängigen jeweils richtigen Knetwirkung und Temperatur läßt sich durch Änderung der Durchlaufzeit und Änderung der Temperatur in wenigen Versuchen anhand der Versuchsergebnisse erreichen. Bei richtiger Devulkanisierung entsteht nach entsprechender Behandlungsdauer/Aufenthaltsdauer von Gummi und Elastomeren ein flockiges Material ohne nennenswerte Festigkeit.

Bei zu hoher Temperatur zeigt das Behandlungsgut die Überhitzung optisch, zum Beispiel als verbacken.

Bei zu geringer Temperatur wird die Vernetzung nicht ausreichend aufgehoben, das ausgetragene Material ist zwar flexibel, zeigt zumindest aber teilweise seine Festigkeit.

Der Planetwalzenextruder ist für die gewünschte Temperierung von Altgummi besonders geeignet, wenn das Gehäuse innenseitig in bekannter Weise eine Buchse besitzt, die zentralspindelseitig mit der beschriebenen Innenverzahnung versehen ist und außenseitig mit einer gleichen oder anderen Verzahnung versehen ist. Die Buchse wird vorzugsweise in das Gehäuse geschrumpft. Dabei verschließt das Gehäuse die Gänge der außenseitigen Verzahnung. Dadurch können diese Gänge als Kanäle genutzt werden.

Die Kanäle werden vorzugsweise durch einen Ringkanal an den Gehäuseenden miteinander verbunden. Der eine Ringkanal ist zulaufseitig vorgesehen und mit einer Zulaufleitung verbunden. Der andere Kanal ist ablaufseitig vorgesehen und mit einer Ablaufleitung verbunden. Beide Leitungen sind Bestandteil einer Temperierung. Als Temperierungsmittel dient Öl.

Das Öl wird durch die Kanäle gepumpt.

Je nach Öltemperatur bewirkt das eine Kühlung oder Beheizung.

Je nach Materialbeschaffenheit des Altgummis kann ein Extruder verwendet werden, dessen Länge ausreicht, um die gesamte Devulkanisierung in einem Extruder vorzunehmen. Das heißt, der Extruder hat dann eine Länge, in der sich die gesamte gewünschte Verweilzeit darstellen läßt.

Vorzugsweise finden jedoch Extruder Anwendung, die aus miteinander fluchtenden Modulen/Abschnitten zusammengesetzt sind. Jeder Modul besitzt ein eigenes Gehäuse und eigene Planetspindeln und einen eigenen Anlaufring. Vorzugsweise ist für alle miteinander fluchtenden Module/Abschnitte eine gemeinsame Zentralspindel vorgesehen.

Die Module/Abschnitte besitzen wahlweise insgesamt oder teilweise eine Länge von kleiner/gleich 800mm, vorzugsweise von kleiner/gleich 600mm und noch weiter bevorzugt von kleiner/gleich 500mm.

Durch kleinere Längen einzelner oder aller Module/Abschnitte kann eine Anpassung an unterschiedliche Temperaturanforderung erfolgen. Darüber hinaus kann die Temperierung an einem längeren Extrudermodul/Extruderabschnitt auch in verschiedene Abschnitte unterteilt werden, die in axialer Richtung hintereinander liegen.

Es können aber auch Modullängen von mehr als 1000 mm, zum Beispiel 1400 mm Anwendung finden.

Je größer der Extruderdurchmesser ist, desto größer wird in der Regel der Durchsatz. Mit der Erhöhung des Durchsatzes kann sich die Verweildauer von Gummi und Elastomeren in dem Extruder verlängern und eine größere Extruderlänge ergeben.

Mit der Modulbauweise/Abschnittsbauweise eröffnet sich am Planetwalzenextruder auch die Möglichkeit zur Änderung der Knetwirkung durch Änderung der Verzahnung bzw. durch Einbau von Modulen mit unterschiedlicher Verzahnung.

Soweit gleiche Module bereits vorgesehen sind, kann im nachhinein noch eine Änderung der Knetwirkung und Durchlaufzeit durch Auswechselung der Plenetspindeln bzw. durch Reduzierung der Planetspindelzahl erreicht werden. Dies beinhaltet bei einem Wechsel des Einsatzgutes einen gravierenden praktischen Vorteil.

In dem Sinne können Noppenspindeln mit Normalspindeln und/oder mit Igelspindeln kombiniert werden. Die Noppenspindeln stellen das eine Extrem für die Bearbeitung von Gummi im Extruder dar, die Wirkung von Igelspindeln und Normalspindeln weicht davon ab. Wenn sich zeigt, daß die Durchlaufzeit in obigem Sinne zu lang ist, können einzelne oder mehrere Noppenspindeln gegen Igelspindeln oder Normalspindeln ausgewechselt werden. Wahlweise finden auch zur Verkürzung der Durchgangszeit Transportspindeln Anwendung, wie sie in der EP702739 beschrieben sind. Das heißt, es werden einzelne oder mehrere Noppenspindeln gegen Transportspindeln ausgewechselt.

Die Transportspindeln bauen gleichfalls auf den Normalspindeln auf. Dabei werden nach der Normalverzahnung einer Spindel einzelne oder mehrere Zähne aus der Spindel herausgearbeitet.

Günstig ist bei der Verarbeitung von Gummi oder dergleichen auch eine unterschiedliche Länge der Planetspindeln, so daß das in einen Planetwalzenmodul eingespeiste Material schonend und nicht schlagartig insgesamt von der Verzahnung ergriffen wird.

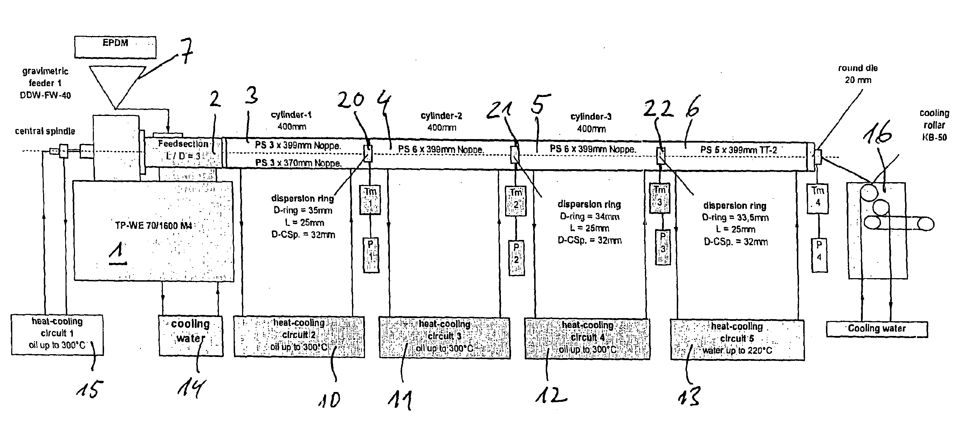

In der Zeichnung ist eine Extrusionsanlage für ein erfindungsgemäßes Verfahren für die Anwendung auf Altgummi dargestellt.

Bei der Extrusionsanlage handelt es sich um eine kleine Baugröße, bestehend aus verschiedenen Abschnitten 2,3,4,5,6.

Davon sind die Abschnitte 3,4,5,6 Planetwalzenmodule. Zu den verschiedenen Planetwalzenmodulen gehören innen verzahnte zylindrische Gehäuse, nicht dargestellte Planetspindeln und eine nicht dargestellte Zentralspindel. Hier ist für alle Planetwalzenmodule eine gemeinsame Zentralspindel vorgesehen. Das heißt, die Zentralspindel erstreckt sich durch alle Planetwalzenmodule.

In allen Planetwalzenmodulen sind jeweils sechs Planetspindeln vorgesehen.

Dabei sind die Planetspindeln der Planetwalzenmodule 3,4,5 als Noppenspindeln ausgebildet, während die Planetspindeln des Planetwalzenmoduls 6 als Transportspindeln ausgebildet sind.

Die Planetspindeln in den Planetwalzenmodulen 4,5,6 besitzen alle die gleiche Länge von 399 mm. Im Planetwalzenmodul 3 sind dagegen drei Planetspindeln mit dieser Länge vorgesehen. Die übrigen drei Planetspindeln besitzen eine kürzere Länge von 370 mm.

Alle Planetspindeln gleiten in nicht dargestellter Weise an üblichen Anlaufringen.

Zu der Extrusionsanlage gehört auch ein als Einschneckenextrudermodul ausgebildetes Füllteil. Dementsprechend dreht sich in dem Füllteil nur eine Schnecke.

Im Ausführungsbeispiel setzt sich die oben beschriebene gemeinsame Zentralspindel als Einschnecke in dem Füllteil bis zum Antrieb 1 fort.

Das Altgummi wird im Ausführungsbeispiel als Schnitzel mit einem mittleren Durchmesser von 15 bis 30mm in das Füllteil 2 eindosiert. Die Dosierung ist mit 7 bezeichnet.

Die Planetwalzenmodule 3, 4 ,5 werden mit Ölkühlern 10, 11,12 während des Devulkanisierungsbetriebes auf einer Temperatur von 300 Grad Celsius gehalten. Die Temperatur ist materialabhängig.

Nach dem Austritt aus dem Planetwalzenmodul 5 wird das devulkanisierte Altgummi in dem Planetwalzenmodul 6 auf 220 Grad Celsius gekühlt, bevor es in krümeliger Form aus der Extrusionsanlage austritt und in einer Wasserkühlung 16 auf Raumtemperatur abgekühlt wird.

Für die Kühlung ist ein Wasserkühler 13 an dem Planetwalzenmodul 6 vorgesehen.

Auch das Füllteil 2 ist mit einem Wasserkühler 14 versehen.

Auch die Kühltemperaturen am Füllteil und nach der Devulkanisierung sind materialabhängig.

Im Ausführungsbeispiel ist überdies eine Innenkühlung der Zentralspindel vorgesehen. Der zugehörige Kühler 15 ist wie die Kühler 10,11,12 ein Ölkühler und auf eine Temperatur von 300 Grad Celsius eingestellt.

Die Devulkanisierung wird durch die mechanische und die thermische Belastung des Altgummis in der Extrusionsanlage bewirkt.

Zur mechanischen Belastung in den Planetwalzenmodulen 3,4,5 tragen auch Dispergierringe 20, 21, 22 bei.

Im Ausführungsbeispiel sind die Dispergierringe in Förderrichtung des Altgummis durch die Anlage hinter den nicht dargestellten Anlaufringen angeordnet.

Dabei ist der Innendurchmesser der Dispergierringe 20,21,22 kleiner als der Außendurchmesser der Zentralspindel. Die Dispergierringe 20,21,22 greifen in nicht dargestellte Nuten in der Zentralspindel, so daß die Zahnlücken zwischen den Zähnen der Zentralspindel bis auf einen engen Spalt am Zahngrund geschlossen sind. Die Dispergierringe 20,21,22 sind im Übrigen zwischen den korrespondierden Enden der Planetwalzenmodule gehalten, so daß auch der die Zentralspindel umgebende Gehäuseraum geschlossen ist und das Altgummi gezwungen ist, durch den engen Spalt zu dringen. Im Ausführungsbeispiel hat der Spalt eine Öffnungsweise von 2mm. Das bewirkt eine extreme Verformung und extreme mechanische Belastung.

Im einzelnen ist der Dispergierring 20 zwischen den Planetwalzenmoduln 3 und 4 , der Dispergierring 21 zwischen den Planetwalzenmodulen 4 und 5 und der Dispergierring 22 zwischen den Planetwalzenmodulen 5 und 6 vorgesehen.

Die Einspannung der Dispergierringe 20,21,22 erfolgt beim Verspannen der zylindrischen Gehäuse der Planetwalzenmodule 3,4,5,6.

Die Planetwalzenmodule 3,4,5,6 besitzen dazu an ihren Enden übliche Flansche, die mit Spannschrauben gegeneinander gezogen werden.

Auch das Füllteil 2 besitzt übliche Flansche, Mit diesen Flanschen ist das Füllteil einerseits an dem Gehäuse des Antriebs 1 verspannt und andererseits mit dem Planetwalzenmodul 3.

Für die im Ausführungsbeispiel in Nuten der Zentralspindel greifenden Dispergierringen 20,21,22 ist vorgesehen, daß diese Ringe sich aus zwei Hälften zusammensetzen, um die Montage zu erleichtern.

Die Montage ist nachfolgend am Dispergierring 20 erläutert. Die Montage der übrigen Dispergierringe 20,21, 22 erfolgt entsprechend.

Nach der Montage des Füllteilgehäuses wird zunächst die Zentralspindel mit ihrem als Einschnecke ausgebildeten Ende in das Füllteilgehäuse geschoben und mit dem Antrieb gekoppelt.

Anschließend wird das Gehäuse des Planetwalzenmoduls 3 über die Zentralspindel geschoben und mit dem Füllteilgehäuse verspannt.

Es folgt die Positionierung der Planetspindeln des Planetwalzenmoduls 3. Dazu werden die Planetspindeln drehend in ihre vorgesehene Position zwischen Gehäuse und Zentralspindel geschoben. Die Position der Planetspindeln ist durch gleichmäßige Verteilung am Umfang der Zentralspindel und den schon beschriebenen Verzahnungseingriff der Planetspindeln mit der Innenverzahnung des Gehäuses und der Außerverzahnung der Zentralspindel gekennzeichnet. Nach der Positionierung der Planetspindeln wird der Anlaufring für die Planetspindeln über die Zentralspindel und in eine zentrische Öffnung des Gehäuseendes des Planetwalzenmoduls geschoben. Der Anlaufring trägt im Berührungsbereich mit den Planetspindeln eine Hartmetallschicht als Verschleißschutz.

Nach Positionierung des Anlaufringes wird der aus zwei Hälften bestehende Dispergierring 20 an dem Anlaufring zur Anlage gebracht. Dabei werden die Hälften zugleich in eine Nut der Zentralspindel geschoben. Die Zentrierung des Dispergierringes erfolgt dann mit Hilfe eines einteiligen Stützringes, der über die Zentralspindel geschoben werden kann und seinerseits in der gleichen Gehäuseöffnung wie der Anlaufring eine Zentrierung im Planetwalzenmodul 3findet. Der Stützring ist zugleich so bemessen, daß er aus dem Ende der Gehäuseöffnung des Planetwalzenmoduls 3 herausragt und eine Zentrierung für das nachfolgend zu montierende Gehäuse des Planetwalzenmoduls 4 bildet. Das Gehäuse des Planetwalzenmoduls 4 wird dabei mit dem Gehäuse des Planetwalzenmoduls 3 in der oben beschriebenen Form verspannt. Diese Verspannung bewirkt zugleich eine Verspannung des Anlaufringes, des Dispergierringes und des Stützringes.

## Patentansprüche

1. Verfahren zum Devulkanisieren von Gummi und Elastomeren, deren Molekülketten durch mechanische und thermische Belastung zerstörbar sind, **dadurch gekennzeichnet, daß** die mechanische und thermische Belastung in einem Planetwalzenextruder
erzeugt wird, wobei der Planetwalzenextruder aus einem Gehäuse, Planetspindeln und einer Zentralspindel besteht und die Zentralspindel mit den Planetspindeln kämmt und die Planetspindeln mit einer Innenverzahnung des Gehäuses oder der Innenverzahnung einer im Gehäuse vorgesehenen Buchse kämmt, so daß eine Drehung der Zentralspindeln ein Umlaufen der Planetspindeln um die Zentralspindel im Gehäuse bewirkt, wobei die Planetspindeln eines Abschnittes mit einer Stirnfläche an einem Anlaufring dieses Abschnittes gleiten,
wobei in dem Planetwalzenextruder mindestens ein Dispergierring vorgesehen ist, der den Strömungsquerschnitt für den Gummi und die Elastomere mehr reduziert als ein Anlaufring.

2. Verfahren nach Anspruch 1, **dadurch gekennzeichnet, daß** Gummi und Elastomere mit einer Schwefelverbindung zwischen den Molekülen für die Dauer von 1 bis 4 min bei einer Temperatur von 200 bis 350 Grad Celsius zur Zerstörung der Molekülketten belastet werden.

3. Verfahren nach Anspruch 2, **gekennzeichnet durch** eine Knetung des zu devulkanisierenden Gummis oder der zu devulkanisierenden Elastomere für die Dauer von 1,5 bis 3min.

4. Verfahren nach Anspruch 2 oder 3, **dadurch gekennzeichnet, daß** die Knetung des zu devulkanisierenden Gummis oder der zu devulkanisierenden Elastomere bei einer Temperatur von 250 bis 300 Grad Celsius.

5. Verfahren nach einem der Ansprüche 1 bis 3, **dadurch gekennzeichnet, daß** das Gummi und die Elastomere nach der Devulkanisierung auf eine Temperatur abgekühlt wird, die mindestens 10% , vorzugsweise mindestens 15% unterhalb der Devulkanisierungstemperatur liegt.

6. Verfahren nach einem der Ansprüche 1 bis 5, **gekennzeichnet durch** die Verwendung eines Kühlers, der dem zur Devulkanisierung vorgesehenen Extruder nachgeschaltet ist.

7. Verfahren nach einem der Ansprüche 1 bis 6, **gekennzeichnet durch** die Verwendung eines Planetwalzenextruders für die Devulkanisierung, der aus mindestens zwei Abschnitten zusammengesetzt ist, insbesondere aus drei Abschnitten zusammen gesetzt ist, wobei zwischen mindestens zwei Abschnitten ein Dispergierring vorgesehen ist, der in dem Extrudergehäuse sitzt und die Zentralspindel umfaßt.

8. Verfahren nach Anspruch 7, **dadurch gekennzeichnet, daß** der Dispergierring einen Innendurchmesser besitzt, der kleiner als der Durchmesser ist, auf dem die Mittelachsen der Planetspindeln um die Zentralspindel umlaufen, wobei die Durchmesserdifferenz mindestens 10%, vorzugsweise mindestens 20% und noch weiter bevorzugt mindestens 30% vom Teilkreisdurchmesser der Planetspindeln ist.

9. Verfahren nach Anspruch 8, **dadurch gekennzeichnet, daß** ein Dispergierring verwendet wird, dessen Innendurchmesser kleiner als der Außendurchmesser der Zentralspindel ist, wobei in die Zentralspindel eine Nut für den Durchtritt des extrudierten Gummis und der Elastomere vorgesehen ist, deren freier Durchtrittsquerschnitt kleiner, vorzugsweise mindestens 10% kleiner, noch weiter bevorzugt mindestens 20% kleiner als der durch die Lücken zwischen den Zähnen der Zentralspindel gebildete Durchtrittsquerschnitt ist, wenn der Innendurchmesser des dispergierringes gleich dem Außendurchmesser der Zentralspindel ist.

10. Verfahren nach Anspruch 9, **gekennzeichnet durch** die Verwendung eines Dispergierringes, der aus mindestens zwei Teilen, vorzugsweise aus zwei Hälften besteht, so daß der Dispergierring um die Zentralspindel herum zusammengesetzt werden kann.

11. Verfahren nach Anspruch 10, **dadurch gekennzeichnet, daß** bei Verwendung von Extrudern, die aus mehreren Abschnitten bestehen, eine gemeinsame Zentralspindel für die verschiedenen Abschnitte vorgesehen ist,
wobei die Zentralspindel über einen Motor und Getriebe angetrieben wird, wobei die Gehäuse der Extruderabschnitte nacheinander und miteinander fluchtend an dem Motorgehäuse bzw. Getriebegehäuse montiert werden und an den korrespondierenden Enden miteinander verspannt werden und
wobei die Zentralspindel montiert wird, bevor der erste, in eine Nut der Zentralspindel greifende Dispergierring montiert wird, und wobei die motorseitig und getriebeseitig vor dem Dispergierring vorgesehenen Planetspindeln montiert werden, bevor der Dispergierring montiert ist,
wobei der Dispergierring zwischen zwei Extrudergehäuseabschnitten positioniert wird, so daß er in die dort für ihn vorgesehene Nut in der Extruderspindel greift und beim Verspannen der Extrudergehäuse zwischen den Extrudergehäusen mit verspannt wird.

12. Verfahren nach einem der Ansprüche 1 bis 11, **dadurch gekennzeichnet, daß** ein mit dem Anlaufring einteiliger Dispergierring verwendet wird.

13. Verfahren nach einem der Ansprüche 1 bis 11, **dadurch gekennzeichnet, daß** ein im Verhältnis zum Anlaufring separater Dispergierring verwendet wird.

14. Verfahren nach Anspruch 12 oder 13, **dadurch gekennzeichnet, daß** bei mehrteiligen Dispergierringen ein Stützring zur Halterung des Dispergierringes verwendet wird.

15. Verfahren nach einem der Ansprüche 1 bis 14, **gekennzeichnet durch** Verwendung eines Planetwalzenextruders, dessen Planetspindeln mindestens teilweise aus Igelspindeln oder Noppenspindeln oder aus Transportspindeln bestehen.

16. Verfahren nach einem der Ansprüche 3 bis 15, **gekennzeichnet durch** Verwendung eines aus Abschnitten/Modulen zusammengesetzten Extruders, dessen Länge der Aufenthaltsdauer des Behandlungsgutes im Extruder angepaßt ist.

17. Verfahren nach Anspruch 16, **dadurch gekennzeichnet, daß** die Knetwirkung und im Extruder und die Aufenthaltsdauer durch Auswechselung von Planetspindeln angepaßt wird.

18. Verfahren nach einem der Ansprüche 4 bis 17, **gekennzeichnet durch** Verwendung ölgekühlter Planetwalzenextruder für die Extruderabschnitte, die für die Devulkanisierung vorgesehen sind.

19. Verfahren nach einem der Ansprüche 6 bis 18, **gekennzeichnet durch** die Verwendung eines wassergekühlten Extruderabschnitts für die nach dem Devulkaniseren vorgesehene Abkühlung des Gummis und der Elastomere.

20. Verfahren nach einem der Ansprüche 1 bis 19, **dadurch gekennzeichnet, daß** das zu devulkanisierende Gummi und Elastomere als Schnitzel mit einem mittleren Durchmesser von 5 bis 40mm, vorzugsweise 15 bis 30mm, in den Planetwalzenextruder eingesetzt werden.

21. Verfahren nach einem der Ansprüch 1 bis 20, **gekennzeichnet durch** die Verwendung unterschiedlich langer Planetspindeln in den Extruderabschnitten.

22. Verfahren nach einem der Ansprüche 1 bis 21, **dadurch gekennzeichnet, daß** an den Dispergierringen Druck und Temperatur des Gummis und der Elastomere gemessen werden.

## Claims

1. Process for devulcanisation of rubber and elastomers, the molecular chains of which are destructible by mechanical and thermal stress, **characterised in that** the mechanical and thermal stress is generated in a planetary roller extruder, wherein the planetary roller extruder comprises a housing, planetary spindles and a central spindle, and the central spindle intermeshes with the planetary spindles and the planetary spindles intermesh with an internal toothing of the housing or with the internal toothing of a liner provided in the housing, such that one revolution of the central spindle causes the planetary spindles to rotate around the central spindle in the housing, wherein the planetary spindles of one section slide with the facing surface at a stop ring of this section, wherein in the planetary roller extruder there is provided at least one dispersion ring that reduces the cross-sectional flow for the rubber and the elastomers more than does a stop ring.

2. Process according to claim 1, **characterised in that** rubber and elastomers having a sulfur compound between the molecules are stressed for a period of 1 to 4 minutes at a temperature of 200 to 350 degree Celsius in order to destroy the molecular chains.

3. Process according to claim 2, **characterised in that** the rubber to be devulcanised or the elastomers to be devulcanised are kneaded for a period of 1.5 to 3 minutes.

4. Process according to claim 2 or 3, **characterised in that** the rubber to be devulcanised or the elastomers to be devulcanised are kneaded at a temperature of 250 to 300 degrees Celsius.

5. Process according to one of claims 1 to 3, **characterised in that** after devulcanisation the rubber and the elastomers are cooled down to a temperature that is at least 10%, preferably at least 15% below the temperature of devulcanisation.

6. Process according to claim 5, **characterised by** the use of a cooler that is installed downstream of the devulcanising extruder.

7. Process according to claim 6, **characterised by** the use of a planetary roller extruder for the devulcanisation which is composed of at least two sections, in particular composed of three sections, wherein between at least two sections a dispersion ring is provided that is seated in the extruder housing and surrounds the central spindle.

8. Process according to claim 7, **characterised in that** the dispersion ring has an internal diameter that is smaller than the diameter on which the central axes of the planetary spindles rotate around the central spindle, wherein the difference of the diameters amounts to at least 10%, preferably at least 20% and even more preferably at least 30% of the pitch diameter of the planetary spindles.

9. Process according to claim 8, **characterised in that** a dispersion ring is used, the internal diameter of which is smaller than the outer diameter of the central spindle, wherein in the central spindle there is provided a groove for the passage of the extruded rubber and the elastomers, the free passage cross section of which is smaller, preferably at least 10% smaller, more preferably at least 20% smaller than the passage cross section formed by the gaps between the teeth of the central spindle when the internal diameter of the dispersion ring is equal to the outer diameter of the central spindle.

10. Process according to claim 9, **characterised by** the use of a dispersion ring that consists of at least two parts, preferably of two halves, such that the dispersion ring can be put together around the central spindle.

11. Process according to claim 10, **characterised in that** when using extruders that consist of a plurality of sections, a common central spindle is provided for the different sections, wherein the central spindle is driven via a motor and gear, wherein the housings of the extruder sections are mounted aligned successively and together at the motor housing and gear housing respectively and are clamped together at the corresponding ends and wherein the central spindle is mounted before the first dispersion ring meshing into a groove of the central spindle is mounted, and wherein the motor-sided and gear-sided planetary spindles provided to be located in front of the dispersion ring are mounted before the dispersion ring is mounted, wherein the dispersion ring is positioned between two sections of the extruder housing, such that it meshes into the groove in the extruder spindle which is provided for the dispersion ring and on clamping the extruder housings the ring is clamped with them between the extruder housings.

12. Process according to one of claims 1 to 11, **characterised in that** a dispersion ring in one-piece with the stop ring is used.

13. Process according to one of claims 1 to 11, **characterised in that** a dispersion ring is used that is separate from the stop ring.

14. Process according to claim 12 or 13, **characterised in that** in the case of multi-part dispersion rings, a support ring is used for retaining the dispersion ring.

15. Process according to one of claims 1 to 14, **characterised by** the use of a planetary roller extruder, whose planetary spindles consist at least partly of zoned helical flights or back-cut spindles or of transport spindles.

16. Process according to one of claims 3 to 15, **characterised by** the use of an extruder, composed of sections/modules, whose length is adapted to the residence time of the material to be treated in the extruder.

17. Process according to claim 16, **characterised in that** the kneading effect and the residence time in the extruder is adapted by changing the planetary spindles.

18. Process according to one of claims 4 to 17, **characterised by** the use of oil-cooled planetary roller extruders for the extruder sections that are provided for the devulcanisation.

19. Process according to one of claims 6 to 18, **characterised by** the use of a water-cooled extruder section for the prescribed cooling of the rubber and the elastomers after devulcanisation.

20. Process according to one of claims 1 to 19, **characterised in that** the rubber and elastomers to be devulcanised are fed into the planetary roller extruder in the form of chips with an average diameter of 5 to 40 mm, preferably 15 to 30 mm.

21. Process according to one of claims 1 to 20, **characterised by** the use of planetary spindles of different length in the extruder sections.

22. Process according to one of claims 1 to 21, **characterised In that** pressure and temperature of the rubber and the elastomer are measured at the dispersion rings.

## Revendications

1. Procédé de dévulcanisation de caoutchouc et d'élastomères dont les chaînes moléculaires sont destructibles par contrainte mécanique et thermique, **caractérisé en ce que** la contrainte mécanique et thermique est générée dans une extrudeuse à vis planétaires, l'extrudeuse à vis planétaires étant constituée d'un boîtier, de broches planétaires et d'une broche centrale, la broche centrale s'engrenant avec les broches planétaires et les broches planétaires s'engrenant avec une denture intérieure du boîtier ou la denture intérieure d'une douille prévue dans le boîtier, de sorte qu'une rotation de la broche centrale provoque une révolution des broches planétaires autour de la broche centrale dans le boîtier, les broches planétaires d'une section glissant avec une face frontale sur une bague de butée de cette section, étant entendu qu'il est prévu dans l'extrudeuse à vis planétaires au moins une bague de dispersion qui réduit davantage la section d'écoulement pour le caoutchouc et les élastomères qu'une bague de butée.

2. Procédé selon la revendication 1, **caractérisé en ce que** le caoutchouc et les élastomères ayant un composé soufré entre les molécules sont soumis à une contrainte pendant une durée de 1 à 4 minute(s) à une température de 200 à 350 degrés Celsius pour détruire les chaînes moléculaires.

3. Procédé selon la revendication 2, **caractérisé par** un malaxage du caoutchouc à dévulcaniser ou des élastomères à dévulcaniser pendant une durée de 1,5 à 3 minute(s).

4. Procédé selon la revendication 2 ou 3, **caractérisé par** le malaxage du caoutchouc à dévulcaniser ou des élastomères à dévulcaniser à une température de 250 à 300 degrés Celsius.

5. Procédé selon l'une des revendications 1 à 3, **caractérisé en ce qu'**après la dévulcanisation, le caoutchouc et les élastomères sont refroidis à une température qui est inférieure d'au moins 10 %, de préférence d'au moins 15 %, à la température de dévulcanisation.

6. Procédé selon l'une des revendications 1 à 5, **caractérisé par** l'utilisation d'un refroidisseur qui est monté en aval de l'extrudeuse prévue pour la dévulcanisation.

7. Procédé selon l'une des revendications 1 à 6, **caractérisé par** l'utilisation, pour la dévulcanisation, d'une extrudeuse à vis planétaires qui est composée d'au moins deux sections, en particulier de trois sections, étant entendu qu'il est prévu entre au moins deux sections une bague de dispersion qui est logée dans le boîtier de l'extrudeuse et qui enserre la broche centrale.

8. Procédé selon la revendication 7, **caractérisé en ce que** la bague de dispersion possède un diamètre intérieur qui est inférieur au diamètre sur lequel les axes médians des broches planétaires courent autour de la broche centrale, la différence de diamètre étant d'au moins 10%, de préférence d'au moins 20% et plus préférentiellement encore d'au moins 30 %, du diamètre d'arc de cercle des broches planétaires.

9. Procédé selon la revendication 8, **caractérisé en ce qu'**il est utilisé une bague de dispersion dont le diamètre intérieur est inférieur au diamètre extérieur de la broche centrale, étant entendu qu'il est prévu dans la broche centrale une rainure pour le passage du caoutchouc et des élastomères extrudés dont la section de passage libre est inférieure, de préférence d'au moins 10 %, et plus préférentiellement encore d'au moins 20 %, à la section de passage formée par les espaces entre les dents de la broche centrale, quand le diamètre intérieur de la bague de dispersion est égal au diamètre extérieur de la broche centrale.

10. Procédé selon la revendication 9, **caractérisé par** l'utilisation d'une bague de dispersion qui est constituée d'au moins deux parties, de préférence de deux moitiés, de sorte que la bague de dispersion peut être assemblée autour de la broche centrale.

11. Procédé selon la revendication 10, **caractérisé en ce que**, en cas d'utilisation d'extrudeuses qui sont constituées de plusieurs sections, il est prévu une broche centrale commune pour les différentes sections, la broche centrale étant entraînée par un moteur et une transmission, les boîtiers des sections d'extrudeuse étant montés les uns derrière les autres et les uns avec les autres en alignement sur le boîtier du moteur ou le boîtier de la transmission et serrés ensemble aux extrémités correspondantes et la broche centrale étant montée avant que la première bague de dispersion logée dans une rainure de la broche centrale soit montée, et les broches planétaires prévues du côté moteur et du côté transmission devant la bague de dispersion étant montées avant que la bague de dispersion soit montée, la bague de dispersion entre deux sections de boîtier d'extrudeuse étant positionnée de sorte qu'elle est logée dans la rainure prévue à cet effet dans la broche d'extrudeuse et qu'elle est serrée entre les boîtiers d'extrudeuse lors du serrage des boîtiers d'extrudeuse.

12. Procédé selon l'une des revendications 1 à 11, **caractérisé en ce qu'**il est utilisé une bague de dispersion formant une seule pièce avec la bague de butée

13. Procédé selon l'une des revendications 1 à 11, **caractérisé en ce qu'**il est utilisé une bague de dispersion séparée de la bague de butée.

14. Procédé selon l'une des revendications 12 ou 13, **caractérisé en ce que**, si la bague de dispersion est en plusieurs parties, il est utilisé une bague d'appui pour soutenir la bague de dispersion.

15. Procédé selon l'une des revendications 1 à 14, **caractérisé par** l'utilisation d'une extrudeuse à vis planétaires dont les broches planétaires sont constituées au moins partiellement de broches "hérissons", de broches "boutons" ou de broches de transport.

16. Procédé selon l'une des revendications 3 à 15, **caractérisé par** l'utilisation d'une extrudeuse constituée de sections/modules dont la longueur est adaptée à la durée de séjour du produit à traiter dans l'extrudeuse.

17. Procédé selon la revendication 16, **caractérisé en ce que** le degré de malaxage et dans l'extrudeuse et la durée de séjour est adaptée par le replacement des broches planétaires.

18. Procédé selon l'une des revendications 4 à 17, **caractérisé par** l'utilisation d'une extrudeuse à vis planétaires à refroidissement à huile pour les sections de l'extrudeuse qui sont prévues pour la dévulcanisation.

19. Procédé selon l'une des revendications 6 à 18, **caractérisé par** l'utilisation d'une section d'extrudeuse à refroidissement à eau pour le refroidissement du caoutchouc et des élastomères prévu après la dévulcanisation.

20. Procédé selon l'une des revendications 1 à 19, **caractérisé en ce que** le caoutchouc et les élastomères à dévulcaniser sont introduits dans l'extrudeuse à vis planétaires sous forme de copeaux d'un diamètre moyen de 5 à 40 mm, de préférence de 15 à 30 mm.

21. Procédé selon l'une des revendications 1 à 20, **caractérisé par** l'utilisation de broches planétaires de différentes longueurs dans les sections de l'extrudeuse.

22. Procédé selon l'une des revendications 1 à 21, **caractérisé en ce que** la température et la pression du caoutchouc et des élastomères sont mesurées sur les bagues de dispersion.
